Europäisches Patentamt

European Patent Office

Office européen des brevets

(19)

(11) Veröffentlichungsnummer: **0 218 833**
A2

(12) **EUROPÄISCHE PATENTANMELDUNG**

(21) Anmeldenummer: 86110886.8

(22) Anmeldetag: 06.08.86

(51) Int. Cl.⁴: **B 65 G 57/06**
**B 65 G 57/24**

(30) Priorität: 18.10.85 DE 3537205

(43) Veröffentlichungstag der Anmeldung:
22.04.87 Patentblatt 87/17

(84) Benannte Vertragsstaaten:
AT BE FR GB IT NL SE

(71) Anmelder: Windmöller & Hölscher
Münsterstrasse 48-52
D-4540 Lengerich i.W.(DE)

(72) Erfinder: Feldkämper, Richard, Dipl.-Ing.
Widumweg 3
D-4540 Lengerich(DE)

(74) Vertreter: Gossel, Hans, Dipl.-Ing. et al,
Rechtsanwälte E. Lorenz - B. Seidler M. Seidler - Dipl.-Ing.
H. K. Gossel Dr. I. Philipps - Dr. P.B. Schäuble Dr. S.
Jackermeier Widenmayerstrasse 23
D-8000 München 22(DE)

(54) Vorrichtung zum Palettisieren von Stapeln.

(57) Eine Vorrichtung dient zum Palettisieren von nebeneinanderliegenden Stapeln (30) aus flachen Gegenständen, vorzugsweise Säcken, in mehreren Schichten. Die Stapel (30) aufeinanderfolgen der Schichten sind vorzugsweise versetzt zueinander angeordnet. Die Vorrichtung besitzt eine die Palette (29) tragende heb- und absenkbare Tischplatte (27). Um in einfacher Weise aus den einzelnen Stapeln stabile Palettenstapel bilden zu können, sind in einem die Tischplatte (27) einfassenden Gestell (1, 2) parallel zueinander und parallel zu der Tischplatte (27) Führungen (3,4) vorgesehen, in denen ein Rahmen schlitten- oder wagenartig durch einen Antrieb (20, 21) zwischen einer Stellung über der Tischplatte (27) und einer Stellung seitlich neben dieser verfahr- oder verschiebbar ist. Der Rahmen ist in zwei übereinanderliegenden Ebenen mit flachen Führungen (6, 7) für über diese laufende endlose Förderbänder (12, 13) versehen. Die jeweils äußeren Trume der Förderbänder sind im Bereich des in Vorschubrichtung hinteren Endes des über die Tischplatte (27) geschobenen Rahmens gestellfest gehalten.

EP 0 218 833 A2

Fig.1

0218833

18. Okt. 1985
34 669    G-die

Windmöller & Hölscher,
4540 Lengerich

Vorrichtung zum Palettisieren von Stapeln

Die Erfindung betrifft eine Vorrichtung zum Palettisieren von
nebeneinanderliegenden Stapeln aus flachen Gegenständen, vorzugsweise Säcken, in mehreren Schichten, wobei die Stapel aufeinanderfolgender Schichten vorzugsweise versetzt zueinander
angeordnet sind, mit einer die Palette tragenden heb- und
absenkbaren Tischplatte.

Von einer Sackmaschine hergestellte, beidendig mit Böden versehene flachliegende Säcke aus Papier oder Kunststoff werden
üblicherweise in Stapelstationen zu flachen Stapeln vorbestimmter Stückzahl gestapelt und die Stapel werden sodann aus der
Stapelstation durch Fördereinrichtungen abgefördert, von denen sie abgenommen und zu ihrem Versand oder zu ihrer Lagerung auf Paletten gestapelt werden. Um aus den einzelnen Stapeln einen stabilen Palettenstapel zu bilden, erfolgt die Stapelu_ _i-cherweise im sogenannten Kaminmuster in der Weise, daß · Schicht aus zwei parallelen Reihen aus jeweils zwei Sta_ besteht, die jeweils um 90° versetzt nebeneinander liegen, so daß jede Schicht eine quadratische Form mit einer mittleren quadratischen Öffnung aufweist. Dabei liegen die einzelnen Stapel einer jeden Schicht jeweils versetzt zueinander, so daß die Fugen zwischen den Stapeln einer Schicht durch die Stapel der folgenden Schicht überdeckt sind.

Da beim Palettieren die einzelnen Stapel auffedern und diese wegen der endseitigen Böden an ihren Enden höher sind als in ihren mittleren Bereichen, ist das Bilden gerader unverrutschter palettisierter Stapel schwierig und aufwendig.

Aufgabe der Erfindung ist es daher, eine Vorrichtung der eingangs angegebenen Art zu schaffen, mit der sich in einfacher Weise aus den einzelnen Stapeln stabile Palettenstapel bilden lassen.

Erfindungsgemäß wird diese Aufgabe bei einer Vorrichtung der gattungsgemäßen Art dadurch gelöst, daß in einem die Tischplatte einfassenden Gestell parallel zueinander und parallel zu der Tischplatte verlaufende Führungen vorgesehen sind, in denen ein Rahmen schlitten- oder wagenartig durch einen Antrieb zwischen einer Stellung über der Tischplatte und einer Stellung seitlich neben der Tischplatte verfahr- oder verschiebbar ist, daß der Rahmen in zwei übereinanderliegenden Ebenen mit flachen Führungen für über diese laufende endlose Förderbänder versehen ist und daß die jeweils äußeren Trume der Förderbänder im Bereich des in Vorschubrichtung hinteren Endes des über die Tischplatte geschobenen Rahmens gestellfest gehalten sind.

Sobald in der erfindungsgemäßen Vorrichtung auf die auf die Tischplatte aufgelegte Palette die erste Lage der Stapel aufgelegt worden ist, wird der Rahmen über diese Lage gefahren und diese durch Anheben der Tischplatte gegen das auf dessen Unter-Seite befindliche Untertrum des unteren Förderbandes angedrückt. Dadurch wird die Lage zusammengepreßt, so daß die diese bildenden einzelnen Stapel nicht verrutschen können. Die folgende Lage der zu palettisierenden Stapel wird nun auf das Obertrum des oberen Förderbandes geschichtet, das eine flache ebene Unterlage bildet, weil dieses auf der Oberfläche der oberen flachen Führung ruht. Das Obertrum bildet somit eine ebene stabile Stapelfläche, so daß sich die folgende zu stapelnde Lage in einfacher Weise auf dieses in der gewünschten Form auflegen läßt. Ist die folgende Lage auf das Obertrum geschichtet worden, wird der Rahmen in seine neben der Palette bzw. neben dem Stapel befindliche Lage zurückgezogen. Hierbei fällt die auf dem Obertrum aufgelegte Lage sanft auf die darunterliegende, weil die jeweils außenliegenden Trume der beiden Förderbänder relativ zu der zusammengepreßten Lage oder dem zusammengepreßten Stapel und der zuletzt aufgelegten Lage keine Relativbewegungen ausführen. Auch ist in der Regel keine größere Fallhöhe der zuletzt aufgelegten Lage beim Herausfahren des Rahmens zu überwinden, weil die zusammengepreßte Lage oder der zusammengepreßte Stapel hinter dem zurückweichenden Rahmen wieder auffedert und die Dicke des Rahmens somit ausgleicht.

Die Bildung des Palettenstapels bis zu der gewünschten Höhe erfolgt in der Weise, daß nach dem Ausfahren des Rahmens dieser wieder über die abgelegte Schicht gefahren wird und diese dann unter Zusammendrücken der vorhergehenden Lagen gegen das Untertrum des unteren Förderbandes durch Anheben der Tischplatte angedrückt wird. Die folgenden Lagen werden sodann auf dem Obertrum des oberen Förderbandes in der beschriebenen Weise aufgelegt und durch Zurückfahren des Rahmens mit den darunterliegenden Lagen zu dem Palettenstapel vereinigt.

Um den Rahmen möglichst flach bauen zu können, bestehen die flachen Führungen für die endlosen Förderbänder zweckmäßigerweise aus zueinander parallelen, endseitig mit abgerundeten Umlenkkanten für die Förderbänder versehenen Platten, die seitlich durch Stege oder Abstandsbleche zu dem Rahmen verbunden sind. Die Förderbänder sind gleitend auf den Platten geführt, so daß auch auf endseitige Umlenkrollen verzichtet werden kann.

In weiterer Ausgestaltung der Erfindung ist vorgesehen, daß die flachen Führungen aus nebeneinander angeordneten, abwechselnd oberen und unteren Führungsstegen bestehen, über die in jeder Ebene geteilte Förderbänder laufen und die unter Bildung eines abgekröpften Profils an ihren Längskanten durch Verbindungsstege, Blechstreifen oder abgekantete Profilstreifen miteinander verbunden sind.

Zweckmäßigerweise ist der Rahmen über Rollen in seitlichen, U-förmigen Führungen des Gestells geführt.

Der Rahmen kann durch Druckmittelkolbenzylindereinheiten verfahrbar sein, die jeweils mit einem Längsschlitz versehen sind, durch den ein mit dem Kolben verbundener Zapfen greift, der mit dem Rahmen verbunden ist. Derartige Druckmittelkolbenzylindereinheiten sind als Orega-Zylinder bekannt.

In weiterer Ausgestaltung der Erfindung ist vorgesehen, daß nur über die untere Führung oder Führungen des Rahmens ein Förderband oder Förderbänder laufen und die obere Führung als glatte Platte ausgebildet ist, wobei im Gestell eine Abstreifplatte für die auf die Platte aufgelegten Stapel gehaltert ist. Da die auf der Platte gebildete Lage der Stapel nur mit geringer Reibkraft auf dieser aufliegt, läßt sich die Lage beim Zurückziehen des
Rahmens durch die Abstreifplatte abschieben, ohne daß ein Verrutschen der einzelnen Stapel zu befürchten ist.

In weiterer Ausgestaltung der Erfindung ist vorgesehen, daß in
den Führungen gegensinnig zwei Rahmen verfahrbar sind, deren
vorderen Enden in ihren jeweils vorgeschobenen Stellungen im
mittleren Bereich der Tischplatte liegen.

Zweckmäßigerweise ist die Tischplatte Teil eines Scherenhubtisches.

Ausführungsbeispiele der Erfindung werden nachstehend anhand der
Zeichnung näher erläutert. In dieser zeigt

Fig. 1     einen Querschnitt durch eine erste
               Ausführungsform der Palettisiervorrichtung,

Fig. 2     eine Seitenansicht der Palettisiervorrichtung
               nach Fig. 1,

Fig. 3     eine Draufsicht auf die Palettisiervorrichtung
               nach den Fig. 1 und 2,

Fig. 4     eine zweite Ausführungsform der Palettisiervorrichtung mit zwei gegensinnig zueinander
               verfahrbaren Preß- und Stapelrahmen in
               Seitenansicht,

Fig. 5     einen Querschnitt durch eine dritte
               Ausführungsform einer Palettisiervorrichtung
               mit über gekröpfte Führungsplatten laufenden
               endlosen Förderbändern und

Fig. 6      eine vierte Ausführungsform einer
Palettisiervorrichtung mit glatter
oberer Stapelplatte des verfahrbaren
Rahmens in Seitenansicht.

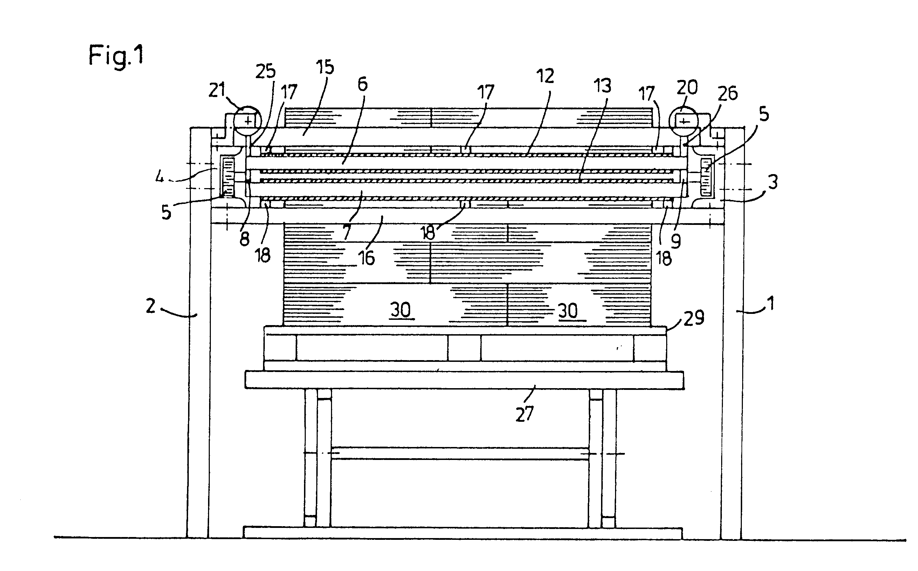

Bei dem Ausführungsbeispiel nach den Fig. 1 bis 3 sind an seitlichen senkrechten Trägern 1, 2 des Maschinengestells parallel
zueinander Führungen 3, 4 mit U-förmigem Profil befestigt. Die
Träger 1, 2 sind durch querverlaufende Traversen miteinander
verbunden.

In den Führungen 3, 4 laufen die Führungsrollen 5 eines Rahmens,
der durch zwei zueinander parallele Platten 6, 7 gebildet ist,
die seitlich durch Stege oder Stegbleche 8, 9 miteinander verbunden sind. Die Achsen der Laufrollen 5 sind an den Stegen 8, 9
befestigt. Die Platten 6, 7 weisen glatte Oberflächen und abgerundete Kanten 10, 11 auf, so daß sie reibungsarme Führungen für
die über diese laufenden endlosen Förderbänder 12, 13 bilden.
In ihrem mittleren Bereich sind die Führungen 3, 4 durch obere
und untere Querträger 15, 16 miteinander verbunden. Diese tragen
in der aus Fig. 1 ersichtlichen Weise Befestigungsbolzen 17, 18,
an denen die jeweils äußeren Trume der Förderbänder 12, 13 festgelegt sind. Zum Verfahren des aus den Platten 6, 7 und den Verbindungsstegen 8, 9 gebildeten Rahmens sind die Orega-Zylinder
20, 21 vorgesehen, die durch Winkelstücke 22, 23 mit ihren einen
Enden auf den Führungen 3, 4 und mit ihren anderen Enden auf dem
Querträger 15 festgelegt sind. Die Zylinder 20, 21 sind längs
einer unteren Mantellinie mit längsverlaufenden Schlitzen versehen, durch die mit den Kolben verbundene Zapfen 25, 26 greifen,
deren anderen Enden an den Platten 6, 7 bzw. den Stegteilen 8, 9
festgelegt sind.

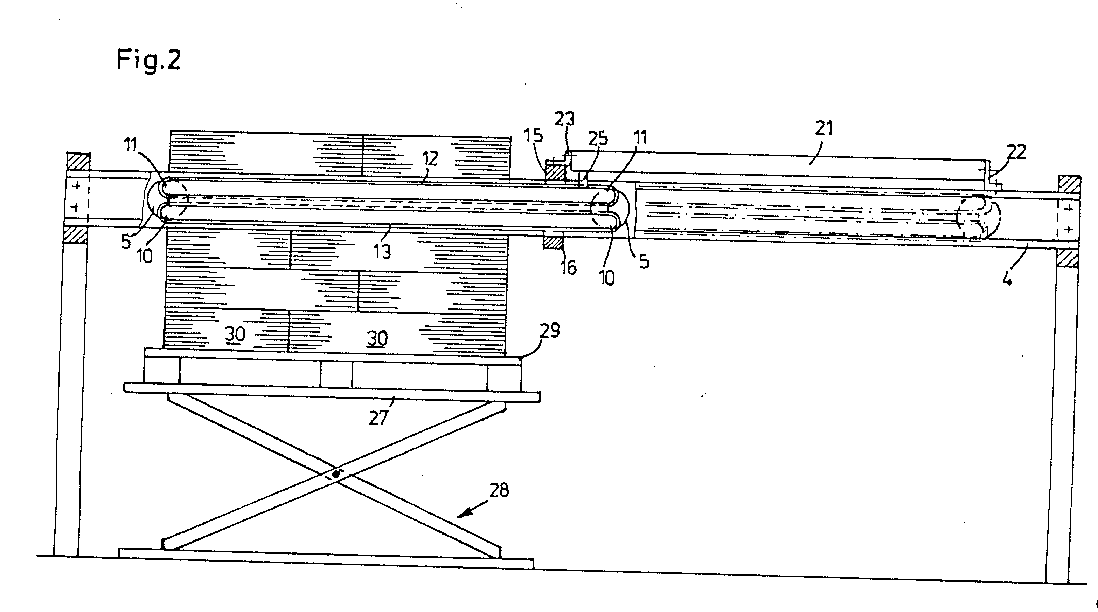

Die Zylinder 20, 21 sind in nicht dargestellter Weise mit Druckmittelleitungen versehen, so daß sich über diese der Rahmen zwischen der aus Fig. 2 ersichtlichen ausgezogenen Stellung über der Tischplatte 27 und der zurückgezogenen, strichpunktiert dargestellten Stellung neben der Tischplatte verfahren läßt.

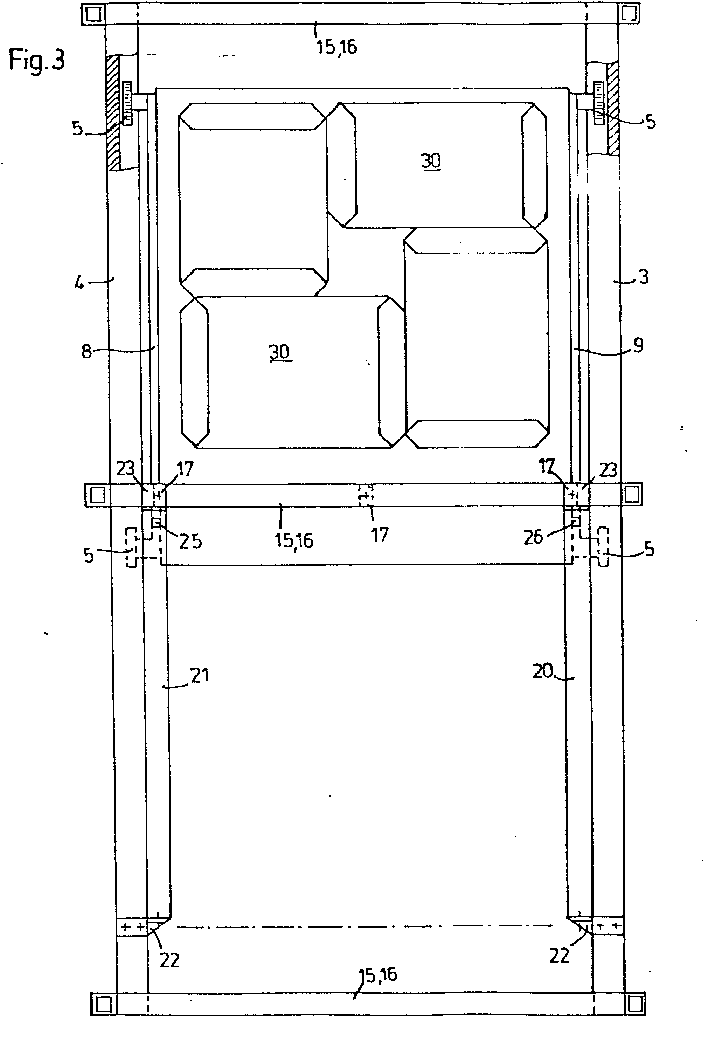

Die Tischplatte 27 ist Teil eines Scherenhubtisches 28. Auf die Tischplatte ist die Palette 29 aufgelegt, auf der die flachen Beutelstapel 30 in dem aus Fig. 3 ersichtlichen sogenannten Kaminmuster aufgeschichtet werden.

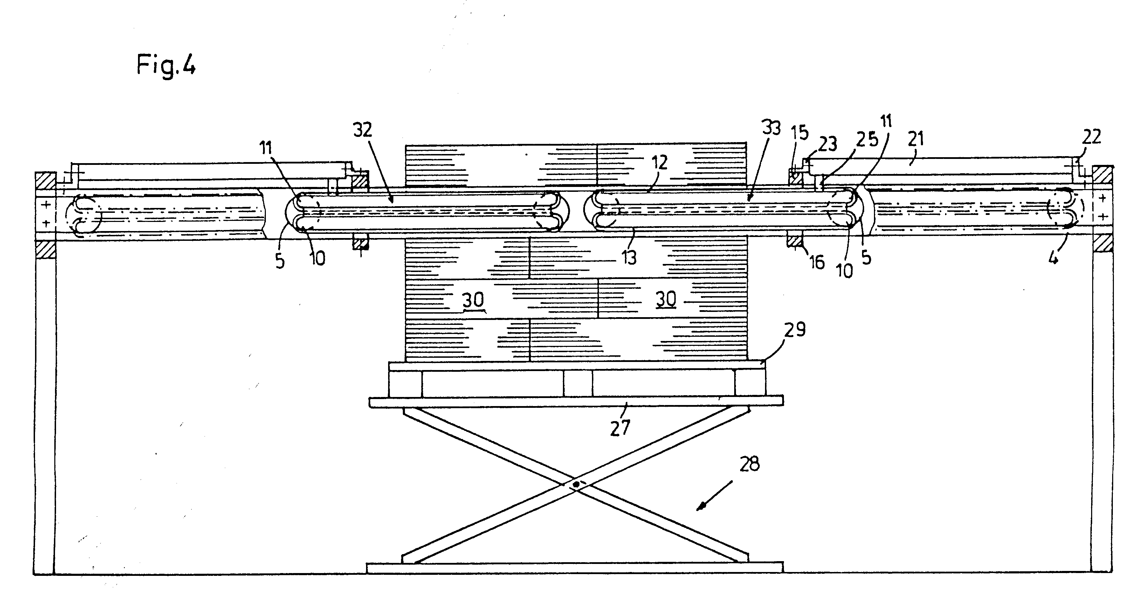

Die zweite aus Fig. 4 ersichtliche Ausführungsform der Palettisiervorrichtung unterscheidet sich von der nach den Fig. 1 bis 3 dadurch, daß zwei gegeneinander verschiebliche Rahmen 32, 33 vorgesehen sind, die in ihrer in vollen Linien dargestellten Stellung jeweils etwa zur Hälfte die Palette 29 übergreifen. Die aus dem Bereich der Palette 29 zurückgezogenen Stellungen der Rahmen 32, 33 sind strichpunktiert dargestellt.

Im übrigen entspricht der Aufbau der Vorrichtung der anhand der Fig. 1 bis 3 erläuterten, so daß auf eine nähere Beschreibung verzichtet wird.

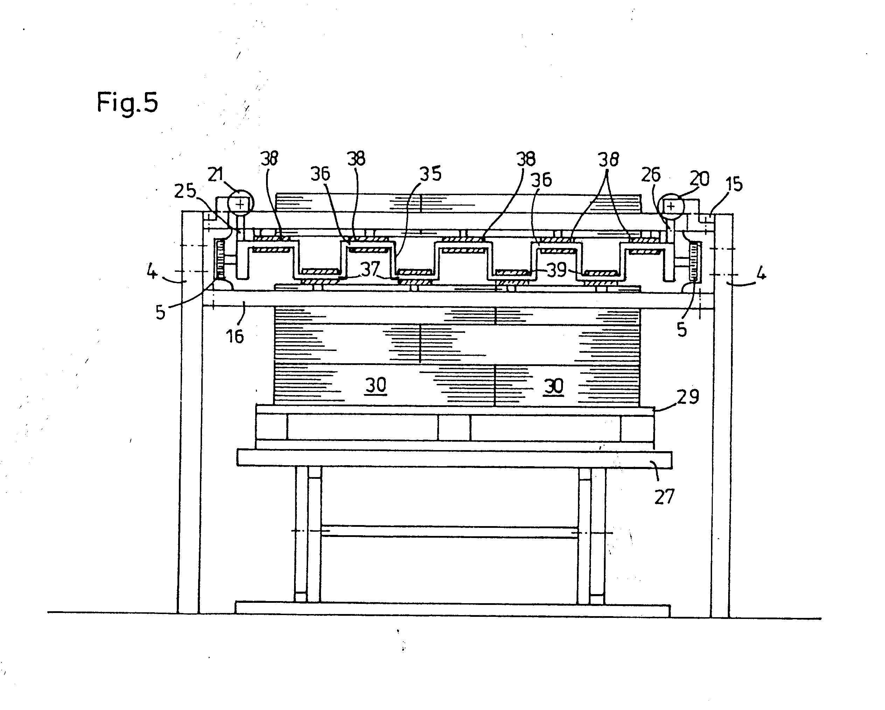

Die aus Fig. 5 ersichtliche Palettisiervorrichtung unterscheidet sich von der nach den Fig. 1 bis 3 lediglich in der Ausgestaltung des die Förderbänder führenden Rahmens. Dieser Rahmen ist durch ein gekröpftes Blech 35 gebildet, der streifenförmige obere und untere Stege 36, 37 aufweist, über die obere und untere endlose Förderbänder 38, 39 laufen.

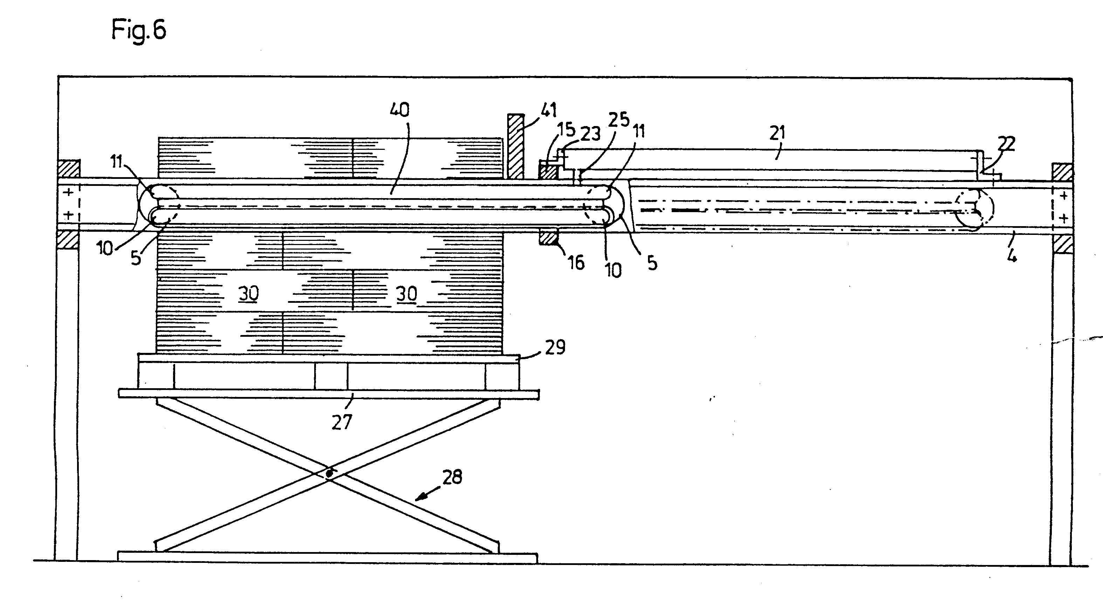

Die vierte Ausführungsform nach Fig. 6 unterscheidet sich von der nach den Fig. 1 bis 3 im wesentlichen nur dadurch, daß über die obere Führungsplatte 40 kein Förderband läuft. Diese ist als Tragplatte ausgebildet, auf der unmittelbar die einzelnen Lagen der Stapel 30 aufgeschichtet werden.

Hinter der jeweils gebildeten Lage ist im Maschinengestell ein querverlaufendes Abstreif- blech 41 vorgesehen, durch das beim Zurückziehen des Rahmens die obere Lage von dem Führungsblech 40 abgestriffen wird.

18. Okt. 1985
34 669   G-die

Windmöller & Hölscher,
4540 Lengerich

## Vorrichtung zum Palettisieren von Stapeln

### Patentansprüche:

1. Vorrichtung zum Palettisieren von nebeneinanderliegenden Stapeln aus flachen Gegenständen, vorzugsweise Säcken, in mehreren Schichten, wobei die Stapel aufeinanderfolgender Schichten vorzugsweise versetzt zueinander angeordnet sind, mit einer die Palette tragenden heb- und absenkbaren Tischplatte,

dadurch gekennzeichnet,

daß in einem die Tischplatte (27) einfassenden Gestell (1, 2) parallel zueinander und parallel zu der Tischplatte (27) Führungen (3, 4) vorgesehen sind, in denen ein Rahmen schlitten- oder wagenartig durch einen Antrieb (20, 21) zwischen einer Stellung über der Tischplatte (27) und

einer Stellung seitlich neben dieser verfahr- oder verschiebbar ist, daß der Rahmen in zwei übereinanderliegenden Ebenen mit flachen Führungen (6, 7; 36, 37) für über
diese laufende endlose Förderbänder (12, 13; 38, 39) versehen ist und daß die jeweils äußeren Trume der Förderbänder im Bereich des in Vorschubrichtung hinteren Endes
des über die Tischplatte (27) geschobenen Rahmens gestellfest gehalten sind.

Vorrichtung nach Anspruch 1, dadurch gekennzeichnet, daß
die flachen Führungen für die endlosen Förderbänder (12,
13) aus zueinander parallelen, endseitig mit abgerundeten
Umlenkkanten (10, 11) für die Förderbänder versehenen
Platten (6, 7) bestehen, die seitlich durch Stege (8, 9)
oder Abstandsbleche zu dem Rahmen verbunden sind.

Vorrichtung nach Anspruch 1, dadurch gekennzeichnet, daß
die flachen Führungen aus nebeneinander angeordneten,
abwechselnd oben und unten liegenden Führungsstegen (36,
37) bestehen, über die in jeder Ebene geteilte Förderbänder (38, 39) laufen und die unter Bildung eines abgekröpften Profils an ihren Längskanten durch Verbindungsstege, Blechstreifen oder abgekantete Profilstreifen
miteinander verbunden sind.

Vorrichtung nach einem der Ansprüche 1 bis 3, dadurch
gekennzeichnet, daß der Rahmen über Rollen (5) in seitlichen U-förmigen Führungen (3, 4) des Gestells geführt
ist.

5. Vorrichtung nach einem der Ansprüche 1 bis 4, dadurch gekennzeichnet, daß der Rahmen durch Druckmittelkolbenzylindereinheiten (sog. Orega-Zylinder) verfahrbar ist, die jeweils mit einem Längsschlitz versehen sind, durch den ein mit dem Kolben verbundener Zapfen (25, 26) greift, der mit dem Rahmen verbunden ist.

6. Vorrichtung nach einem der Ansprüche 1 bis 5, dadurch gekennzeichnet, daß nur über die untere Führung oder Führungen des Rahmens ein Förderband oder Förderbänder laufen und die obere Führung als glatte Platte (40) ausgebildet ist und daß im Gestell eine Abstreifplatte (41) für auf die Platte (40) aufgelegte Stapel (30) gehaltert ist.

7. Vorrichtung nach einem der Ansprüche 1 bis 6, dadurch gekennzeichnet, daß in den Führungen (3, 4) gegensinnig zwei Rahmen (32, 33) verfahrbar sind, deren vorderen Enden in ihren jeweils vorgeschobenen Stellungen im mittleren Bereich der Tischplatte (27) liegen.

8. Vorrichtung nach einem der Ansprüche 1 bis 7, dadurch gekennzeichnet, daß die Tischplatte (27) Teil eines Sche-renhubtisches ist.

Fig.1

Fig.2

0218833

Fig. 3

Fig.4

Fig.5

0218833

Fig.6

0218833